# EUROPEAN PATENT APPLICATION

(11) **EP 3 952 281 A1**
(43) Date of publication of application: **09.02.2022**
(21) Application number: 20783710.5
(22) Date of filing: 30.01.2020
(51) Int. Cl.: H04N 5/232, G03B 15/00, H04N 5/247

(54) **INFORMATION PROCESSING DEVICE, INFORMATION PROCESSING METHOD, AND PROGRAM**

(30) Priority: 29.03.2019 JP 2019066171
(71) Applicant: Sony Group Corporation, Tokyo 108-0075 (JP)
(72) Inventor: YAMADA, Naohide, Tokyo 108-0075 (JP); HATTORI, Hironori, Tokyo 108-0075 (JP); KAMIYA, Koji, Tokyo 108-0075 (JP); TSUBAKI, Satoshi, Tokyo 108-0075 (JP)
(74) Representative: D Young & Co LLP
(86) International application number: PCT/JP2020/003417
(87) International publication number: WO 2020/202756

(57) **Abstract**

Provided is an information processing device including: an imaging position information calculation unit that calculates a position and an orientation of an imaging device as imaging device position information on the basis of camera data received from the imaging device in association with video data; and an information display control unit that controls a display of the imaging device position information. Provided is an information processing method performed by a processor, the method including: calculating a position and an orientation of an imaging device as imaging device position information on the basis of camera data received from the imaging device in association with video data; and controlling a display of the imaging device position information.

## Description

### TECHNICAL FIELD

The present disclosure relates to an information processing device, an information processing method, and a program.

### BACKGROUND ART

In sports broadcasting and the like, a video (main video) to be broadcasted or distributed, recorded, and transmitted is selected from among videos generated by the image capturing of imaging devices. The main video is selected by a user of a system processing the videos by checking each of the videos and determining which video is appropriate as the main video.

At this time, the user can more easily select the main video by grasping states of the imaging devices. For example, Patent Document 1 discloses a technology for displaying positions, orientations, and imaging ranges of the imaging devices on a map on a display screen.

### CITATION LIST

### PATENT DOCUMENT

Patent Document 1: Japanese Patent Application Laid-Open No. H09-289606

### SUMMARY OF THE INVENTION

### PROBLEMS TO BE SOLVED BY THE INVENTION

By the way, the state of the imaging device such as the position or the orientation may be changed by the above-described system or by an on-site operator. However, Patent Document 1 does not consider that the operator at the imaging site moves the imaging device or changes the orientation of the imaging device.

### SOLUTIONS TO PROBLEMS

According to the present disclosure, there is provided an information processing device including: an imaging position information calculation unit that calculates a position and an orientation of an imaging device as imaging device position information on the basis of camera data received from the imaging device in association with video data; and an information display control unit that controls a display of the imaging device position information.

Furthermore, according to the present disclosure, there is provided an information processing method performed by a processor, the method including: calculating a position and an orientation of an imaging device as imaging device position information on the basis of camera data received from the imaging device in association with video data; and controlling a display of the imaging device position information.

Furthermore, according to the present disclosure, there is provided a program for causing a computer to function as an information processing device including: an imaging position information calculation unit that calculates a position and an orientation of an imaging device as imaging device position information on the basis of camera data received from the imaging device in association with video data; and an information display control unit that controls a display of the imaging device position information.

### BRIEF DESCRIPTION OF DRAWINGS

Fig. 1 is a diagram for explaining an example of an overall configuration of a system 1 according to the present embodiment.
Fig. 2 is a diagram for explaining an example in which camera data is acquired by an imaging device 10 according to the same embodiment.
Fig. 3 is a diagram for explaining an example in which the camera data is superimposed by the imaging device 10 and a CCU 20 according to the same embodiment.
Fig. 4 is a diagram for explaining an example of a functional configuration of an information processing device 30 according to the same embodiment
Fig. 5 is a diagram for explaining an example of processing by an imaging position information calculation unit 340 for calculating an imaging range of the imaging device 10 according to the same embodiment
Fig. 6 is a diagram for explaining an example in which a display is controlled by an information display control unit 360 according to the same embodiment.
Fig. 7 is a diagram for explaining an example in which a display of a next main video candidate is controlled by the information display control unit 360 according to the same embodiment.
Fig. 8 is a diagram for explaining another example in which a display is controlled by the information display control unit 360 according to the same embodiment.
Fig. 9 is a diagram for explaining an example in which a display of a next main video candidate is controlled by the information display control unit 360 according to the same embodiment.
Fig. 10 is a diagram for explaining an example in which a display of the imaging device 10 in a predetermined situation is controlled by the information display control unit 360 according to the same embodiment.
Fig. 11A is a diagram for explaining an example in which a display mode in a case where at least one of a position or an orientation of the imaging device 10 does not satisfy history information is controlled by the information display control unit 360 according to the same embodiment.
Fig. 11B is a diagram for explaining an example in which a display mode in a case where at least one of a position or an orientation of the imaging device 10 does not satisfy history information is controlled by the information display control unit 360 according to the same embodiment.
Fig. 12 is a diagram for explaining an example in which a display is controlled by the information display control unit 360 in relation to an input operation received by an information input unit 370, and the information input unit 370 receives the input operation according to the same embodiment.
Fig. 13 is a diagram for explaining an example of an operation flow related to processing by the information processing device 30 for calculating imaging device position information of a plurality of imaging devices 10 according to the same embodiment.
Fig. 14 is a diagram for explaining an example of an operation flow related to processing by the imaging position information calculation unit 340 for calculating imaging ranges of the imaging devices 10 and processing by the information display control unit 360 for displaying the imaging ranges according to the same embodiment.
Fig. 15 is a diagram for explaining an example of an operation flow related to processing by the information processing device 30 for selecting which imaging device 10 generates video data to be used as a main video from among the plurality of imaging devices 10 according to the same embodiment.
Fig. 16 is a block diagram showing a hardware configuration example of the information processing device 30 according to an embodiment of the present disclosure.

### MODE FOR CARRYING OUT THE INVENTION

Preferred embodiments of the present disclosure will be described in detail below with reference to the accompanying drawings. Note that, in the present specification and the drawings, components having substantially the same functional configuration are denoted by the same reference sign, and overlapping description thereof will be omitted.

Note that the description will be given in the following order.
1. Background
2. Embodiment
   2.1. Example of Overall Configuration
   2.2. Example of Functional Configuration of Information Processing Device 30
   2.3. Example of Display Control
      2.3.1. Example 1 of Display Control
      2.3.2. Example 2 of Display Control
      2.3.3. Example 3 of Display Control
      2.3.4. Example 4 of Display Control
      2.3.5. Example 5 of Display Control
      2.3.6. Example 6 of Display Control
      2.3.7. Example 7 of Display Control
   2.4. Example of Operation
      2.4.1. Example 1 of Operation
      2.4.2. Example 2 of Operation
      2.4.3. Example 3 of Operation
3. Example of Hardware Configuration
4. Conclusion

### <1. Background>

First, the background of the present disclosure will be described. In a system broadcasting or distributing, recording, and transmitting videos in sports-viewing fields and the like, a user selects which video will be a main video to be broadcasted or distributed, recorded, and transmitted while checking the videos generated by the image capturing of a plurality of imaging devices. Therefore, in a case where there is generated a plurality of videos, the user checks each of the videos and determines in real time which video is better to select as the main video. For example, the user selects such a video that a player to be imaged is captured in a bigger size or a predetermined player is captured in a sports broadcast scene.

Furthermore, if positions, orientations, and the like of the imaging devices arranged at an imaging site can be grasped by the user, a more suitable video can be selected. Patent Document 1 discloses a technique for displaying a position, an orientation, and an imaging range of an imaging device on a map on a display screen. However, Patent Document 1 does not consider a change in the display caused when an operator who is present at an imaging site moves the imaging device or changes an orientation of the imaging device.

The technical idea according to the present disclosure has been conceived in view of the above-described point, making it possible to visually grasp positions, orientations, and imaging ranges of imaging devices in real time, so that it can be intuitively determined which imaging device has generated better video data to be selected.

### <2. Embodiment>

### <<2.1. Example of Overall Configuration>>

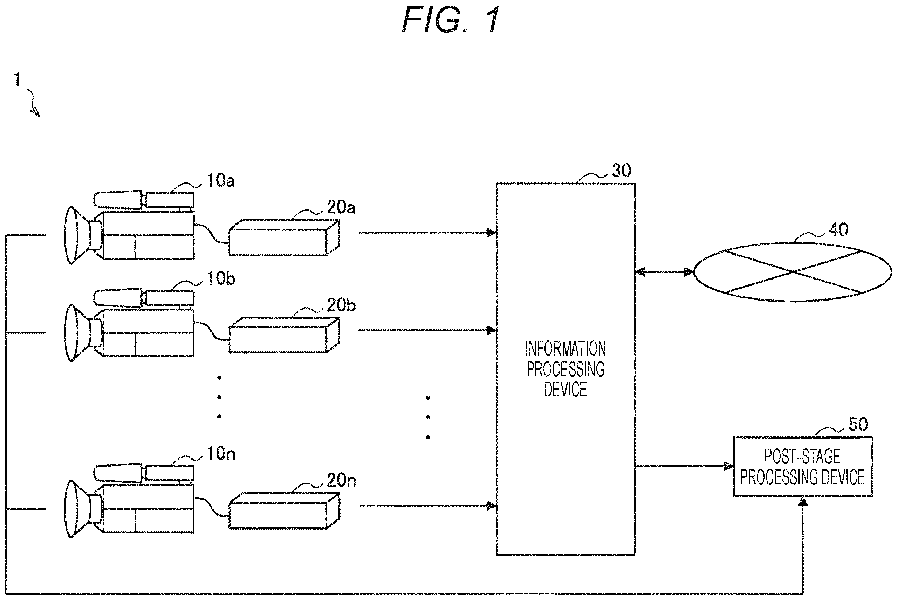

Next, an example of an overall configuration of a system 1 according to the present embodiment will be described with reference to Fig. 1. The system 1 according to the present embodiment includes an imaging device 10, a camera control unit (CCU) 20, an information processing device 30, a network 40, and a post-stage processing device 50.

The imaging device 10 generates video data by capturing images. Furthermore, the imaging device 10 may acquire information indicating a state of the imaging device 10 as camera data. The camera data is associated with the video data, for example, in a superimposed form, and is transmitted to the CCU 20 to be described later.

The CCU 20 controls the imaging device 10, and receives the video data and the camera data associated with the video data from the imaging device 10. Furthermore, the CCU 20 transmits the video data to the information processing device 30 to be described later.

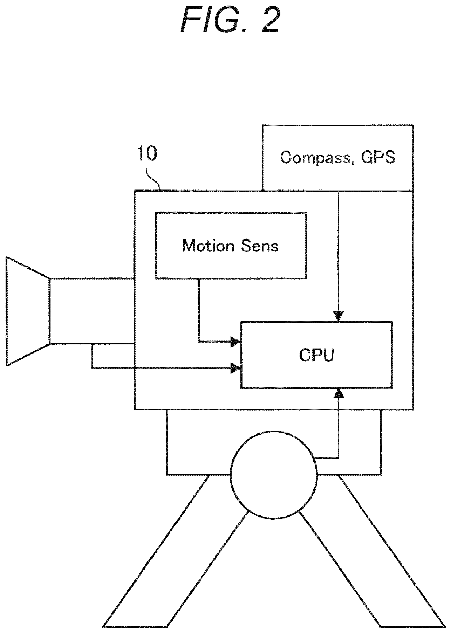

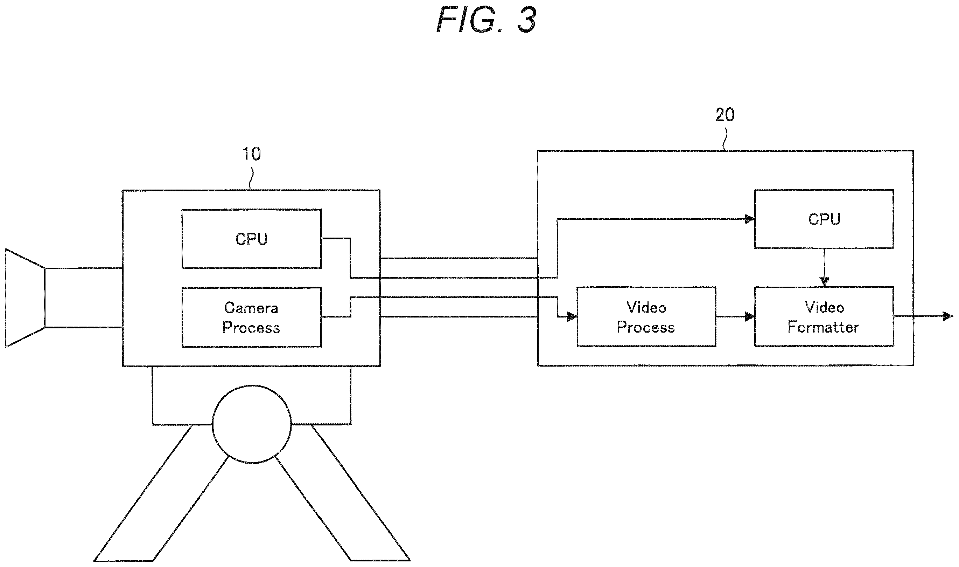

Note that, as shown in Fig. 1, the system 1 may include a plurality of imaging devices 10a to 10n and a plurality of CCUs 20a to 20n in combination, respectively. The imaging device 10 and the CCU 20 can be connected to each other, for example, by camera cables. Here, an example in which the camera data is acquired and superimposed by the imaging device 10 and the CCU 20 according to the present embodiment will be described with reference to Figs. 2 and 3.

Fig. 2 is a diagram for explaining an example where the camera data is acquired by the imaging device 10 according to the present embodiment. The imaging device 10 is schematically shown in Fig. 2. The imaging device 10 acquires various information from each unit. For example, a central processing unit (CPU) included in the imaging device 10 may acquire, as the camera data, data such as a zoom value and a focus distance from a lens, acceleration information and angle information of the imaging device 10 from a motion sensor, and information regarding a pan and a tilt from a tripod mounted on the imaging device 10. The CPU of the imaging device 10 transmits the above-described acquired information to the CCU 20 to be described later.

Fig. 3 is a diagram for explaining an example where the camera data is superimposed by the imaging device 10 and the CCU 20 according to the present embodiment. The imaging device 10 and the CCU 20 are schematically shown in Fig. 3. The imaging device 10 transmits the camera data shown in Fig. 2 to a CPU of the CCU 20 via a camera cable. On the other hand, a camera processor of the imaging device 10 transmits image capturing data generated by capturing the images to a video processor of the CCU 20 via a camera cable. A video formatter (software) of the CCU 20 superimposes the camera data on the video data, and transmits the video data on which the camera data is superimposed to the information processing device 30 in a serial digital interface (SDI) format. Note that time codes are superimposed on the video data.

Note that the video data and the camera data may be transmitted to the information processing device 30 via a network such as Ethernet (registered trademark), with the camera data being superimposed on a header of a video streaming format. Furthermore, an example in which the camera data is transmitted to the information processing device 30 in the SDI format will be described in the following specification, but the transmission/reception of the camera data is not limited to such an example. For example, the information processing device 30 may acquire the camera data of the imaging device 10 by using a global positioning system (GPS).

Referring back to Fig. 1, the example of the overall configuration of the system 1 according to the present embodiment will be described.

The information processing device 30 calculates a position and an orientation of the imaging device 10 on the basis of the camera data received from the CCU 20 in the SDI format, and displays information indicating the position and the orientation of the imaging device on the basis of a calculation result. Hereafter, the information indicating the position and the orientation of the imaging device will also be referred to as the imaging device position information. Furthermore, the information processing device 30 may calculate an imaging range of the imaging device 10 on the basis of the camera data, and display information indicating the calculated imaging range. That is, the imaging device position information includes information indicating the position, the orientation, and the imaging range of the imaging device 10. The information processing device 30 may include, for example, a display device to display the information described above.

The information processing device 30 may receive auxiliary data from an external database server via the network 40 to be described later. Here, the auxiliary data refers to information related to an object to be imaged that exists at an imaging site. The information related to the object includes, for example, object position information indicating a position of the object. In a case where the system 1 is used for sports broadcasting, the object is, for example, a player, a ball, or the like.

The information processing device 30 may display information related to a field (imaging site), the object position information, and the imaging device position information in association with each other on the basis of the video data, the camera data, and the auxiliary data. Various kinds of processing of the information processing device 30 will be described in detail later.

The network 40 functions to connect the information processing device 30 and the external database server to each other. The network 40 may include a public network such as the Internet, a telephone network, or a satellite communication network, various local area networks (LANs) including Ethernet (registered trademark), a wide area network (WAN), and the like. Furthermore, the network 40 may include a dedicated network such as an internet protocol-virtual private network (IP-VPN). Furthermore, the network 40 may include a wireless communication network such as Wi-Fi (registered trademark) or Bluetooth (registered trademark). The auxiliary data is transmitted from the external database server to the information processing device 30 via the network 40.

The post-stage processing device 50 switches a main video and creates a highlight video using the various data transmitted from the information processing device 30 on the basis of a request from the information processing device 30. Note that the post-stage processing device 50 may receive some of the video data and the camera data from the imaging device 10 or the CCU 20 without using the information processing device 30.

### <<2.2. Example of Functional Configuration of Information Processing Device 30>>

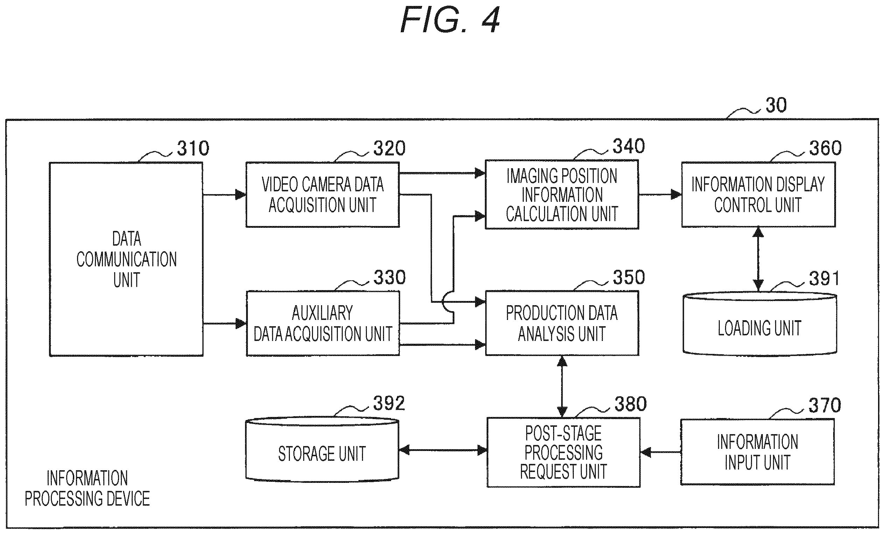

Next, an example of a functional configuration of the information processing device 30 according to the present embodiment will be described with reference to Fig. 4. The information processing device 30 according to the present embodiment includes a data communication unit 310, a video camera data acquisition unit 320, an auxiliary data acquisition unit 330, an imaging position information calculation unit 340, a production data analysis unit 350, an information display control unit 360, an information input unit 370, a post-stage processing request unit 380, a loading unit 391, and a storage unit 392.

The data communication unit 310 receives video data and camera data associated with the video data from the CCU 20. Furthermore, the data communication unit 310 may receive auxiliary data from the external database server via the network 40. Note that the data communication unit 310 may execute other required communication with the CCU 20 or the external database server.

The video camera data acquisition unit 320 acquires the video data and the camera data from the data received by the data communication unit 310. The video camera data acquisition unit 320 transmits the acquired video data and camera data to each of the imaging position information calculation unit 340 and the production data analysis unit 350.

The auxiliary data acquisition unit 330 acquires the auxiliary data from the data received by the data communication unit 310. Among the acquired auxiliary data, the auxiliary data acquisition unit 330 transmits, for example, object position information and the like to the imaging position information calculation unit 340, and furthermore, transmits data used for the post-stage processing of the post-stage processing device 50 to the production data analysis unit 350.

The imaging position information calculation unit 340 calculates a position and an orientation of the imaging device 10 as the imaging device position information as the imaging device position information on the basis of the camera data received from the imaging device 10 in association with the video data. Furthermore, the imaging position information calculation unit 340 may further calculate an imaging range of the imaging device 10 on the basis of information indicating an angle of view and a focus distance of the imaging device 10 included in the received camera data.

Here, an example in which the imaging range of the imaging device 10 is calculated by the imaging position information calculation unit 340 will be described. First, the imaging position information calculation unit 340 holds as a data table in advance information indicating characteristics of the imaging device 10 and information indicating characteristics of the lens mounted on the imaging device 10. The characteristics of the imaging device 10 and the characteristics of the lens may be held to be associated with a model number of the imaging device 10 and a model number of the lens, respectively.

The imaging position information calculation unit 340 calculates an angle of view, for example, on the basis of a zoom value included in the camera data. On the basis of the zoom value and a focus distance, the imaging position information calculation unit 340 calculates what horizontal distance an object away from the imaging device 10 is to be imaged at. Finally, the imaging position information calculation unit 340 calculates an imaging range on the basis of the angle of view and a focus position.

Furthermore, in a case where the imaging device 10 changes an orientation in a vertical direction, such as when there is a vertical distance between the imaging device 10 and the object (their heights are different), the horizontal distance of the imaging range of the imaging device 10 is shorter than that in a case where the imaging device 10 is orientated in a horizontal direction.

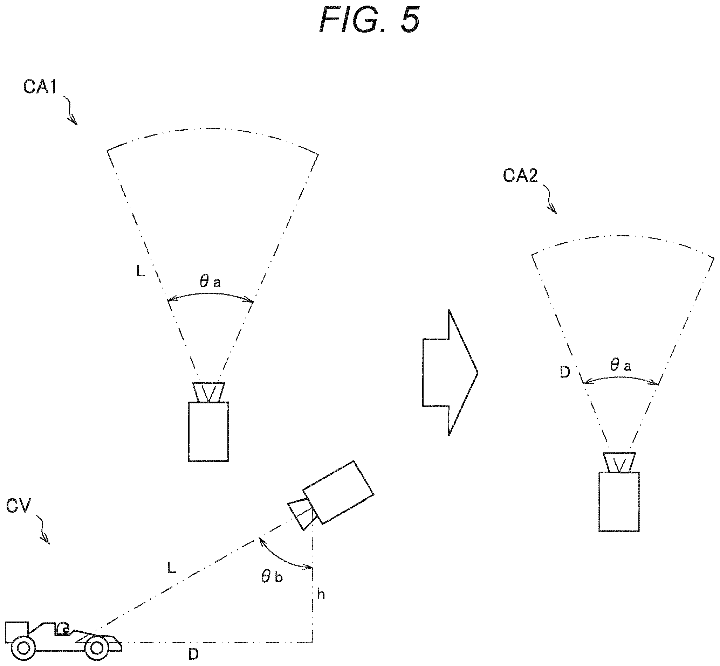

Here, an example of the processing by the imaging position information calculation unit 340 for calculating the imaging range of the imaging device 10 according to the present embodiment will be described with reference to Fig. 5. On the left side of Fig. 5, Fig. CA1 and Fig. CV are shown. Fig. CA1 shows an imaging range of the imaging device 10, and Fig. CV shows each kind of distance in a case where there is a vertical distance between the imaging device 10 and the object.

In Fig. CA1 showing an imaging range of the imaging device 10 on the left side of Fig. 5, the imaging range with a focus distance L and an angle of view θa is shown. The imaging range shown here is a range in a case where there is no difference in height, that is, in a case where the imaging device 10 is oriented horizontally. Furthermore, in Fig. CV showing each kind of distance in a case where there is a vertical distance between the imaging device 10 and the object on the left side of Fig. 5, a focus distance L, an angle of elevation θb, a horizontal distance D, and a vertical distance h are shown. Here, the focus distance L is the same as the focus distance L shown in Fig. CA1 showing the imaging range of the imaging device 10.

The vertical distance h may be calculated, for example, using heights measured in advance at respective positions in a field that is an imaging site. Alternatively, the vertical distance h may be calculated using heights detected on the basis of sensors provided in the imaging device 10 and the object. Furthermore, in a case where most of the field is at the same height, for example, like a soccer court, a height at a predetermined position may be regarded as a height of the entire field, and the vertical distance h may be calculated using differences in height of the imaging device 10 and the object from the field.

The imaging position information calculation unit 340 calculates the horizontal distance D on the basis of the focus distance L and the vertical distance h calculated by the above-described method. Next, on the basis of the calculated horizontal distance D, the imaging position information calculation unit 340 calculates an imaging range in a case where there is a difference in height between the imaging device 10 and the object, that is, in a case where the imaging device 10 changes an orientation in the vertical direction, as in Fig. CA2 showing an imaging range of the imaging device 10 on the right side of Fig. 5.

In this way, even in a case where there is a difference in height between the imaging device 10 and the object, it is possible to check what the imaging range is at the horizontal distance, and accordingly, it is possible to more accurately select an imaging device 10 capturing a video to be selected as a main video.

Alternatively, the imaging position information calculation unit 340 may calculate object position information indicating a position of the object to be imaged, for example, on the basis of the video data or the auxiliary data, and associate the object position information with the imaging device position information. The object position information may be calculated on the basis of whether or not the object to be imaged is captured in the video data, and if so, how big the object is captured. Furthermore, on the basis of the camera data and the auxiliary data, the imaging position information calculation unit 340 may specify an imaging device 10 corresponding to video data to be a main video or an imaging device 10 expected to generate video data to be a next main video. Furthermore, the imaging position information calculation unit 340 may further calculate an association between the position of the object to be imaged and the position of the imaging device 10.

Note that, in a case where a plurality of imaging devices 10 is connected to the information processing device 30 via the CCU 20, the imaging position information calculation unit 340 may execute the above-described processing for each of the imaging devices 10.

Referring back to Fig. 4, the example of the functional configuration of the information processing device 30 according to the present embodiment will be described.

The production data analysis unit 350 acquires the video data, the camera data, and the auxiliary data from the video camera data acquisition unit 320 and acquires the auxiliary data from the auxiliary data acquisition unit 330, and the acquired data is stored in the storage unit 392 to be described later. Furthermore, the production data analysis unit 350 may store the video data and the camera data in association with time codes in the storage unit 392.

The production data analysis unit 350 is an example of a video creation control unit providing predetermined video data and camera data to the post-stage processing request unit 380 on the basis of a request from the post-stage processing request unit 380 to be described later. The video data, camera data, and auxiliary data provided by the production data analysis unit 350 are transmitted to the post-stage processing device 50 via the post-stage processing request unit 380, and can be used for switching a main video, creating a highlight video, and the like.

The information display control unit 360 controls a display of information indicating the position and the orientation of the imaging device 10 calculated by the imaging position information calculation unit 340. In a case where the imaging position information calculation unit 340 has calculated an imaging range of the imaging device 10, the information display control unit 360 may control a display of the calculated imaging range. Furthermore, in a case where the imaging position information calculation unit 340 has calculated a position of the object, the information display control unit 360 may control a display of the calculated position of the object to correspond to the position of the imaging device 10.

Concerning the example in which the display is controlled by the information display control unit 360, specific examples will be described later.

The information input unit 370 receives an input operation for the information displayed by the information display control unit 360. For example, the information input unit 370 may include a touch panel superimposed on the information display control unit 360 to receive a touch operation for the information displayed by the information display control unit 360. Furthermore, the information input unit 370 may receive a request for creating a highlight video using the video data generated by the image capturing of the imaging devices 10.

The post-stage processing request unit 380 requests the post-stage processing device 50 to perform processing for switching the imaging device 10 selected for the main video. Furthermore, the post-stage processing request unit 380 may request the post-stage processing device 50 to create a highlight video using the imaging data generated by the plurality of imaging devices 10. The request for the processing for switching the imaging device 10 or the processing for creating the highlight video can be executed by the post-stage processing request unit 380, for example, on the basis of an input received by the information input unit 370. Note that when requesting the creation of the highlight video, the post-stage processing request unit 380 receives the video data required for generating the highlight video, the camera data associated with the video data, and the auxiliary data from the production data analysis unit 350.

The loading unit 391 loads history information indicating a change history of the imaging device 10. The history information loaded by the loading unit 391 is used by the information display control unit 360 to control a display in a case where at least one of the position or the orientation of the imaging device 10 does not satisfy the history information.

The storage unit 392 stores the video data and the camera data associated with the video data, which are transmitted from the imaging device 10, and the auxiliary data, which is transmitted from the external database server via the network 40. The storage unit 392 appropriately provides the above-described data to the production data analysis unit 350 on the basis of a control of the production data analysis unit 350.

The example of the functional configuration of the information processing device 30 according to the present embodiment has been described above. Note that the functional configuration described above with reference to Fig. 4 is merely an example, and the functional configuration of the information processing device 30 according to the present embodiment is not limited to such an example.

### <<2.3. Example of Display Control>>

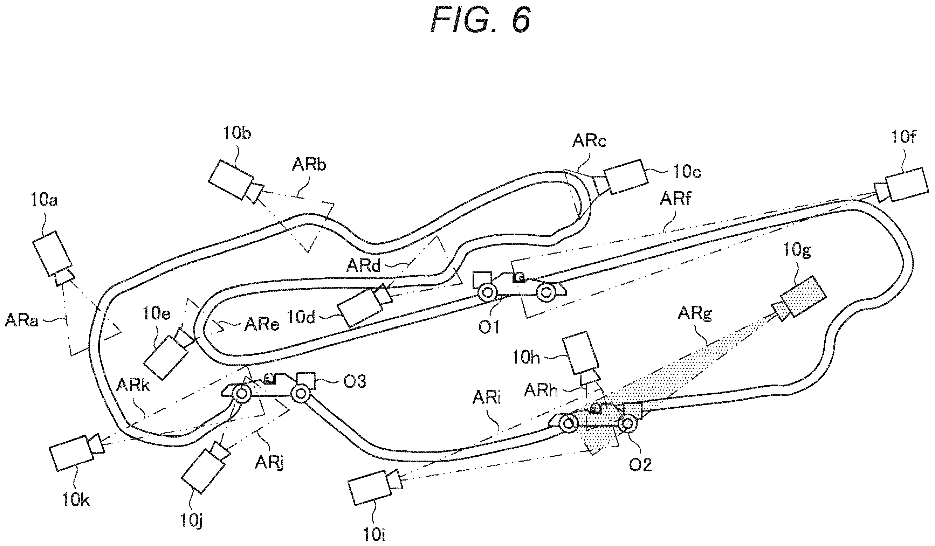

Next, specific examples in which the display is controlled by the information display control unit 360 according to the present embodiment will be described with reference to Figs. 6 to 11.

### [2.3.1. Example 1 of Display Control]

First, an example in which a display is controlled by the information display control unit 360 according to the present embodiment will be described with reference to Fig. 6. The information display control unit 360 controls a display of information indicating the position and the orientation of the imaging device 10 as the imaging device position information calculated by the imaging position information calculation unit 340. For example, the display of the information indicating the position and the orientation of the imaging device 10 may be controlled to express an icon for the imaging device 10 in such a manner as to be displayed at a corresponding position in the field, and furthermore, to see a direction in which the imaging device 10 is actually oriented. Furthermore, the information display control unit 360 may control information indicating a position and an orientation of an imaging device 10 selected for a main video among the plurality of imaging devices 10 to be displayed in a different manner from information indicating positions and orientations of the other imaging devices 10.

An example of Fig. 6 will be described. Fig. 6 shows an example in which a screen is displayed by the information display control unit 360. Specifically, Fig. 6 shows information indicating a field that is an imaging site, icons 10a to 10k for imaging devices 10, imaging ranges ARa to ARk corresponding to the icons 10a to 10k, respectively, and objects O1 to O3 which are racing cars. Here, for example, the imaging device 10g generates video data selected as a main video. Here, the imaging device 10g is displayed in a different manner from the other imaging devices 10 whose video data is selected as the main video.

In this way, the information display control unit 360 controls the information related to the imaging devices 10 and the objects as calculated by the imaging position information calculation unit 340 to be displaying on one screen, so that a user can intuitively grasp positional relationships between the imaging devices 10 and the objects, including imaging ranges.

Note that the information display control unit 360 may control the display of the above-described information in real time. Specifically, in a case where a position or an orientation of the imaging device 10 changes due to its movement or rotation, the information display control unit 360 controls a display to reflect the change in real time. Note that, as described above, the video data and the camera data associated with the video data are transmitted from the imaging devices 10 to the information processing device 30 via the CCU 20. Therefore, even in a case where the user of the information processing device 30 does not control the position or orientation of the imaging device 10, such as in a case where the imaging device 10 is moved or rotated by an operator at the imaging site, the information display control unit 360 can display the position or orientation of the imaging device 10 in real time.

Furthermore, the information input unit 370 may receive an input operation for information indicating the position and the orientation of the imaging device 10 displayed by the information display control unit 360. Here, the input operation is, for example, a touch operation for the information indicating the position and the orientation of the imaging device 10 displayed on a display on which a touch panel is superimposed as the imaging device position information. The post-stage processing request unit 380 requests the post-stage processing device 50 to switch the imaging device 10 selected for the main video, on the basis of the input operation received by the information input unit 370 for the information indicating the position and the orientation of the imaging device 10.

In the example of Fig. 6, in a case where the information input unit 370 receives a touch operation, for example, on an icon for the imaging device 10k displayed by the information display control unit 360, the post-stage processing request unit 380 may request the post-stage processing device 50 to switch to video data of the imaging device 10k as the main video.

In this way, the imaging device 10 generating video data as the main video can be selected on the basis of visual information, and switching processing can be performed without making too much effort.

### [2.3.2. Example 2 of Display Control]

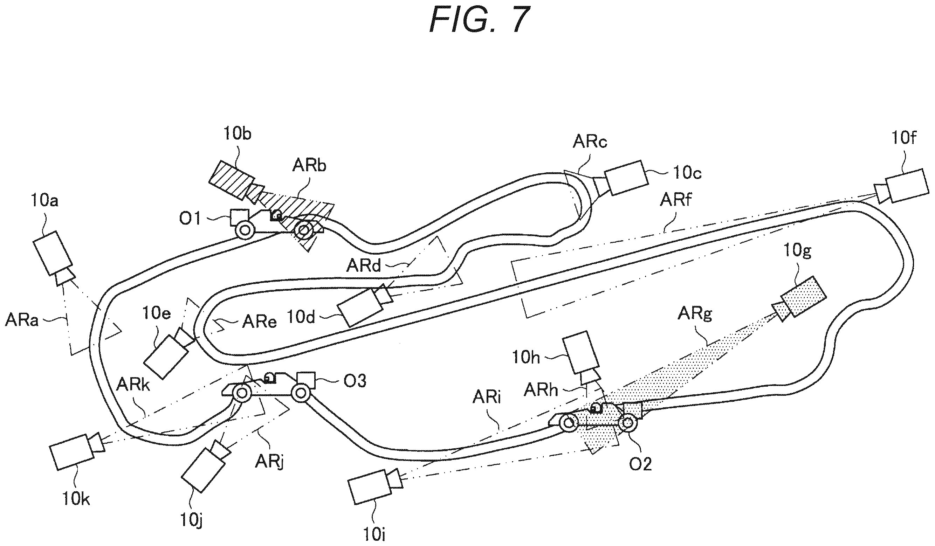

Next, an example in which a display of a next main video candidate is controlled by the information display control unit 360 according to the present embodiment will be described with reference to Fig. 7. The information display control unit 360 may control an output mode of an imaging device 10 that is a next main video candidate on the basis of the camera data and the auxiliary data. For example, the information display control unit 360 may change the output mode of an imaging device 10 having a current object within its imaging range as an imaging device 10 generating video data as the next main video candidate.

An example of Fig. 7 will be described. Fig. 7 shows an example in which a screen is displayed by the information display control unit 360. Specifically, Fig. 7 shows information indicating a field that is an imaging site, icons 10a to 10k for imaging devices 10, imaging ranges ARa to ARk corresponding to the icons 10a to 10k, respectively, and objects O1 to O3. The object O1 exists in the imaging range ARb of the imaging device 10, in a situation where video data of the imaging device 10g is selected as the main video. Here, on the basis of such a situation, the information display control unit 360 changes display modes of the imaging device 10b and the imaging range ARb.

In this way, the output mode of the imaging device 10 having the object within its imaging range is changed on the basis of the camera data, thereby making it possible to prevent a timing at which the object is captured from being missed.

### [2.3.3. Example 3 of Display Control]

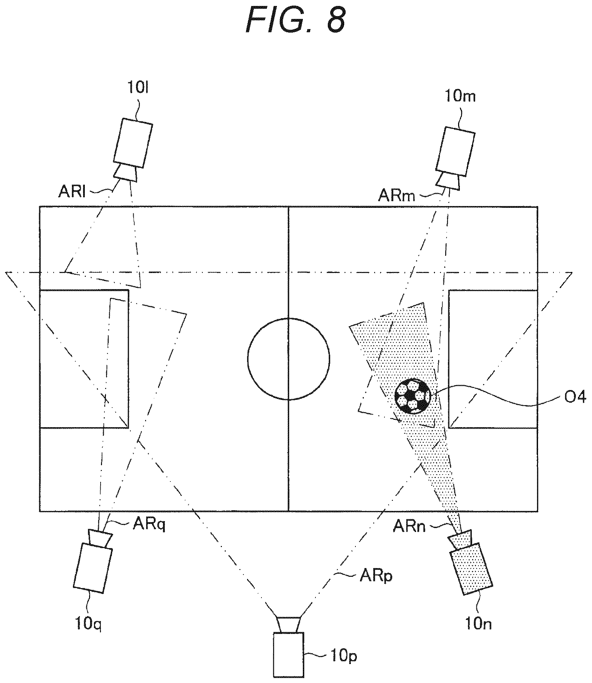

Next, another example in which a display is controlled by the information display control unit 360 according to the present embodiment will be described with reference to Fig. 8. In Figs. 6 and 7, the examples in which the object is a racing car have been described, but in the sports field, the object may be a ball. In the example shown in Fig. 8, the information display control unit 360 may display an object O4 that is a ball and control an imaging device 10 having the object O4 within its imaging range to be displayed in a different display mode from the other imaging devices 10.

An example of Fig. 8 will be described. In a situation of Fig. 8, video data of an imaging device 10n having the object O4 within its imaging range is selected as a main video. Note that the object O4 exists within imaging ranges of an imaging device 10m and an imaging device 10p as well. In such a case, for example, among the imaging data of the plurality of imaging devices 10, imaging data with which the object can be imaged in a biggest size may be selected as the main video.

### [2.3.4. Example 4 of Display Control]

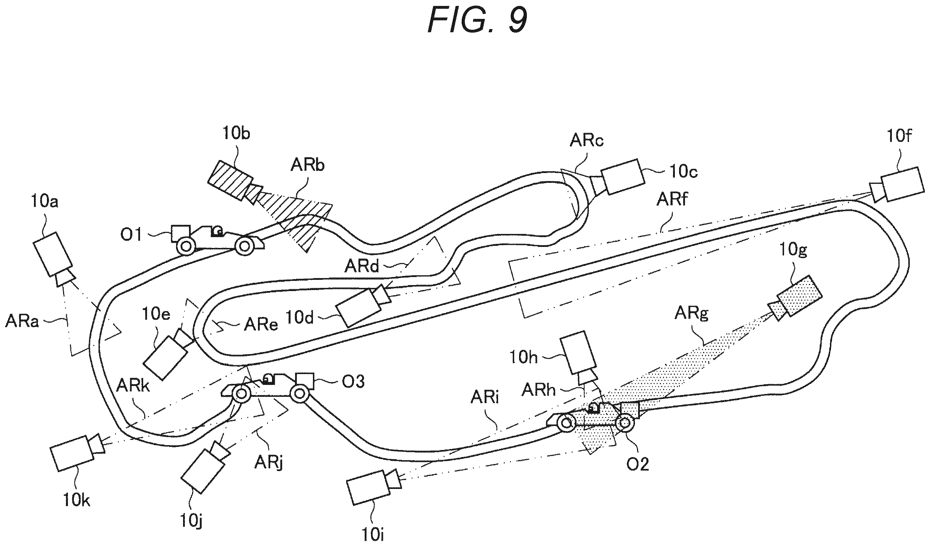

Next, an example in which a display of a next main video candidate is controlled by the information display control unit 360 according to the present embodiment will be described with reference to Fig. 9. The information display control unit 360 may control imaging device position information of an imaging device 10 generating video data selected as a main video, among the plurality of imaging devices 10, to be displayed in a different mode from those of the other imaging devices 10. Furthermore, the information display control unit 360 may specify an imaging device 10 that is a next main video candidate on the basis of the imaging device position information and the object position information. For example, the information display control unit 360 may specify an imaging device 10 expected to have the object within its imaging range after a predetermined time as an imaging device 10 generating video data as the next main video candidate.

An example of Fig. 9 will be described. Fig. 9 shows an example in which a screen is displayed by the information display control unit 360. Fig. 9 differs from Fig. 6 in that the object O1 exists near the imaging range ARb of the imaging device 10b and is expected to move into the imaging range ARb after the predetermined time.

In the example of Fig. 9, since the object O1 is expected to move into the imaging range ARb of the imaging device 10b, the information display control unit 360 controls the imaging device position information of the imaging device 10b to be displayed in a different mode (to be discriminated) from those of the other imaging devices 10.

In this way, on the basis of the camera data and the auxiliary data, the imaging device position information of the imaging device 10 that is the next main video candidate is displayed in a different display mode from those of the other imaging devices 10, so that the user can determine an imaging device 10 to be selected next in a short time.

### [2.3.5. Example 5 of Display Control]

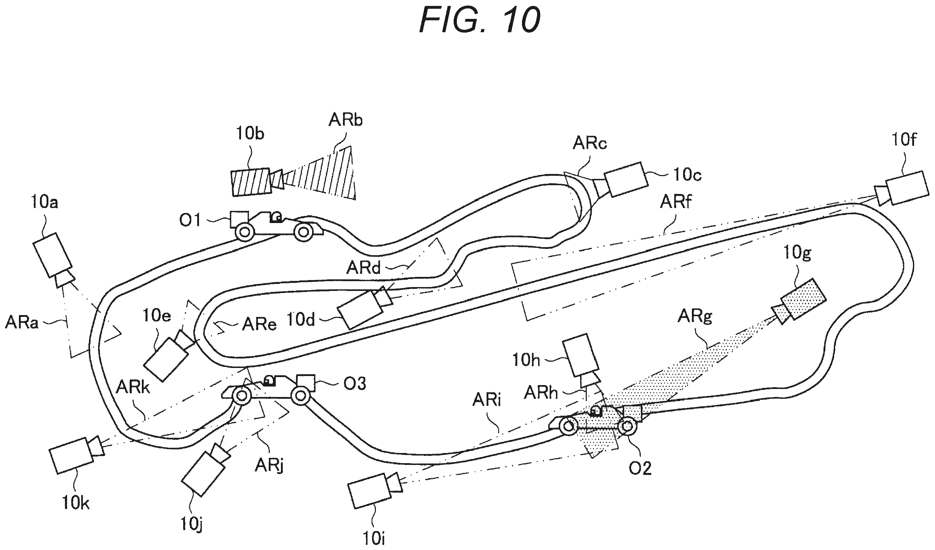

Next, an example in which a display of an imaging device 10 in a predetermined situation is controlled by the information display control unit 360 according to the present embodiment will be described with reference to Fig. 10. On the basis of the camera data, the information display control unit 360 may control imaging device position information of an imaging device 10 of which at least one of a position or an orientation does not change for a predetermined time or longer to be displayed in a different mode from those of the other imaging devices 10. Alternatively, on the basis of the camera data, the information display control unit 360 may control imaging device position information of an imaging device 10 of which at least one of a position or an orientation needs to change to be displayed in a different mode from those of the other imaging devices 10. For example, the information display control unit 360 may control a display mode of an imaging device 10 suitable for imaging an object, among the plurality of imaging devices 10, to indicate that the imaging device 10 is not able to image the object.

An example of Fig. 10 will be described. Fig. 10 shows an example in which a screen is displayed by the information display control unit 360. Specifically, Fig. 10 shows information indicating a field that is an imaging site, imaging ranges ARa to ARk corresponding to the icons 10a to 10k for imaging devices 10, respectively, and objects O1 to O3. In a situation of Fig. 10, the camera data indicates that a situation where an imaging device 10b is oriented in a direction in which its imaging range ARb does not include the object O1 is maintained for a predetermined time or longer. Here, on the basis of such a situation, the information display control unit 360 changes display modes of the imaging device 10b and the imaging range ARb.

In this way, on the basis of the camera data, the output mode of the imaging device 10 that has not been moved for the predetermined time or longer or needs to be moved is changed, so that the operator can give an instruction to a person operating the imaging device 10 at the imaging site, or the user of the information processing device 30 can directly control the imaging device 10 to be appropriately positioned and oriented.

### [2.3.6. Example 6 of Display Control]

By the way, the object imaged by the imaging device 10 may move periodically. For example, the racing car described above as a specific example runs along a predetermined course. As another example in which an object moves periodically, in baseball, a ball often moves back and forth between a pitcher and a catcher. In a case where the object moves differently than it does periodically, this may be a notable scene, that is, video data in which the scene is captured may be a main video. For example, in baseball, a ball usually moves back and forth between a pitcher and a catcher, but when an event such as a hit occurs, the ball may move to the outfield or the like, causing an unusual change in position.

For example, in a case where a change occurs differently than the changes in position or orientation, most of which are caused by an imaging device 10 capturing images in such a manner as to chase an object, a mode in which imaging device position information of the imaging device 10 is displayed may be changed to notify the user of a possibility that a notable scene is currently occurring.

Therefore, the information display control unit 360 may control imaging device position information of an imaging device 10 of which at least one of a position or an orientation does not satisfy the history information, among the imaging devices 10, to be displayed in a different mode from those of the other imaging devices 10. For example, on the basis of the history information indicating a history of change in imaging device position information of the imaging device 10 loaded by the loading unit 391, in a case where it is indicated that the object changes by a predetermined distance or further as compared with the periodic change in position, the information display control unit 360 may control the imaging device position information of the imaging device 10 having the object within its imaging range to be displayed in a different mode from those of the other imaging devices 10.

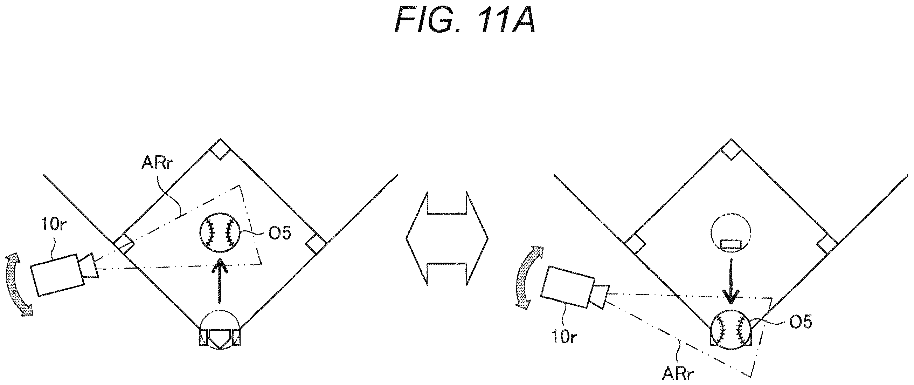

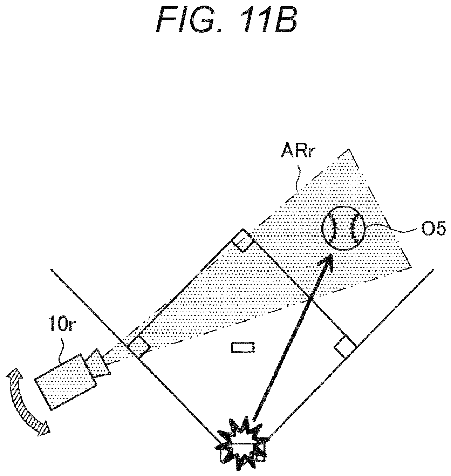

Here, an example in which a display mode in a case where at least one of a position or an orientation of an imaging device 10 does not satisfy the history information is controlled by the information display control unit 360 according to the present embodiment will be described with reference to Figs. 11A and 11B. Figs. 11A and 11B are examples each showing a position and an orientation of an imaging device 10 and a position of a ball in a baseball game.

In Fig. 11A, an imaging device 10r, an imaging range ARr of the imaging device 10r, and an object O5 are displayed by the information display control unit 360. Here, as shown on the left side and the right side of Fig. 11A, the object O5 periodically moves between two predetermined points. The periodic changes of the object O5 in position are loaded by the loading unit 391 as the imaging information position information of the imaging device 10r whose orientation is changed to follow the object O5. Furthermore, the imaging device 10r changes its orientation to follow the change in position of the object O5, that is, such that the object O5 is positioned in the imaging range ARr.

Here, in a case where a change in position occurs differently than the periodic changes in position of the object O5 shown in Fig. 11A, the information display control unit 360 changes display modes of the imaging device 10r and the imaging range ARr. In the example shown in Fig. 11B, in a case where it is indicated by the change history of the imaging device 10r provided by the loading unit 391 that the object O5, which is a ball, has moved toward the outfield, the information display control unit 360 changes the display modes of the imaging device 10r and the imaging range ARr.

In this way, the user is notified of a change in position different than the periodic changes in position of the object on the basis of the imaging device position information of the imaging device 10, so that the user can select a video in which a predetermined scene is captured without missing the video.

Note that the above-described history information may be loaded by the loading unit 391 as the change history indicating the periodic changes in imaging device position information of the imaging device 10 at a predetermined timing. Furthermore, the history information may be appropriately updated on the basis of the change in position of the imaging device 10 after being loaded by the loading unit 391. On the other hand, the history information can also be checked or modified by the user via the information input unit 370.

Note that, for example, a change in position different than the periodic changes in position may be detected by a person operating the imaging device 10 by pressing a button or the like included in the imaging device 10. When the button or the like included in the imaging device 10 is pressed, a predetermined signal is superimposed on a video. On the basis of the predetermined signal, the information processing device 30 may determine that a predetermined scene has occurred.

In addition, a change in position different than the periodic changes in position may be detected only on the basis of, for example, a change in orientation of the imaging device 10. Furthermore, the information display control unit 360 may change either both or one of the display modes of the information indicating the position and the orientation of the imaging device 10 and the information indicating the imaging range that do not satisfy the history information.

### [2.3.7. Example 7 of Display Control]

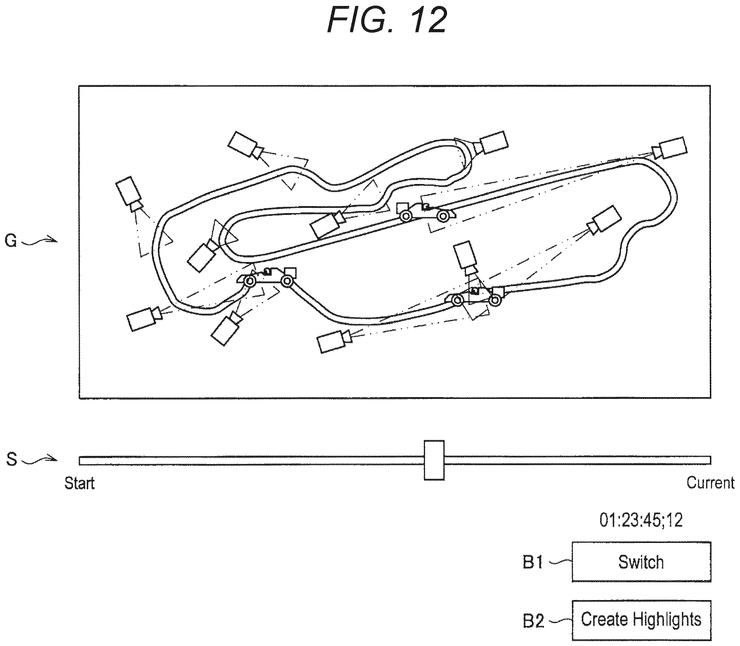

Next, an example in which a display is controlled by the information display control unit 360 in relation to an input operation received by the information input unit 370, and the information input unit 370 receives the input operation according to the present embodiment will be described with reference to Fig. 12. In Fig. 12, field information, imaging device position information, and object position information are shown as an image G. Furthermore, in Fig. 12, a time-based slider S, a switching button B1, and a highlight video creation button B2 are shown below the image G.

An example of Fig. 12 will be described below. The image G is similar to the display screens shown in Figs. 6 to 11. The slider S is a slider with which it can be selected what time between an imaging initiation time and a current time or an imaging termination time time-based video data is displayed for as the image G. The switching button B1 is a button with which the post-stage processing device 50 can be requested to switch to the video data of the imaging device 10 selected for the image G as the main video. The highlight video creation button B2 is a button with which the post-stage processing device 50 can be requested to generate a highlight video satisfying a predetermined condition.

In this way, the information input unit 370 receives an input operation for the information displayed by the information display control unit 360, thereby making it easier to perform various editing operations. Of course, the control of the display by the information display control unit 360 in relation to the input operation received by the information input unit 370 and the receipt of the input operation by the information input unit 370 are not limited to such an example.

### <<2.4. Example of Operation>>

### [2.4.1. Example 1 of Operation]

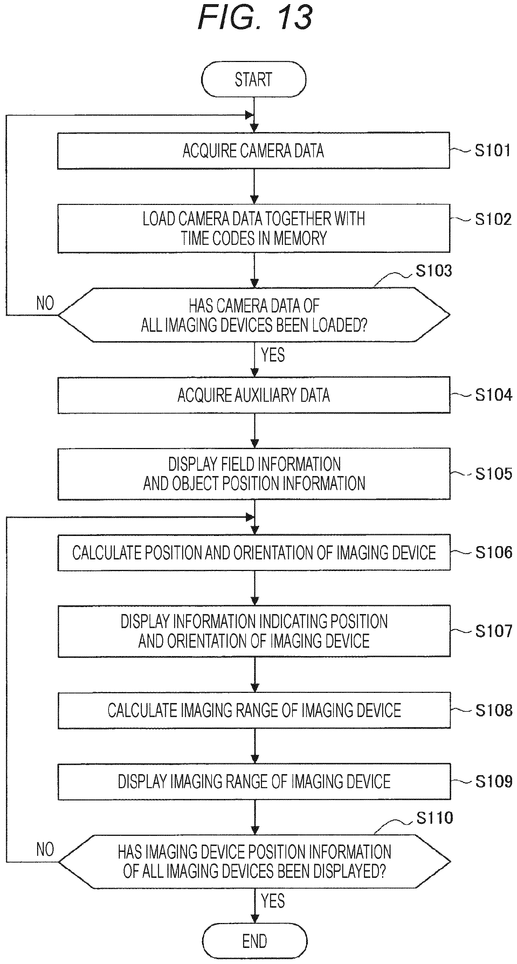

Next, an example of an operation flow related to processing by the information processing device 30 for calculating imaging device position information of the plurality of imaging devices 10 according to the present embodiment will be described with reference to Fig. 13. First, the video camera data acquisition unit 320 acquires camera data of any of the imaging devices 10 from the data communication unit 310 (S101). Next, the video camera data acquisition unit 320 loads the camera data acquired in step S101 together with time codes in a memory (S102). Next, in a case where the camera data of all the imaging devices 10 has not been loaded in the memory together with time codes (S103: NO), the process returns to step S101.

On the other hand, in a case where the camera data of all the imaging devices 10 has been loaded in the memory together with the time codes (S103: YES), the auxiliary data acquisition unit 330 acquires auxiliary data from the data communication unit 310 (S104). Note that step S104 may be executed before executing steps S101 and S102, or may be executed in parallel with steps S101 and S102. Next, the imaging position information calculation unit 340 calculates an entire area of a field, which is an imaging site, on the basis of the camera data of the plurality of imaging devices 10 loaded in step S102 (S105).

Next, the imaging position information calculation unit 340 calculates a position and an orientation of any of the imaging devices 10 on the basis of the camera data acquired in step S101 (S106). Next, the information display control unit 360 displays information indicating the position and the orientation of the imaging device 10 calculated in step S106 (S107).

Next, the imaging position information calculation unit 340 calculates an imaging range of the imaging device 10 in which the information indicating the position and the orientation of step S107 is displayed, on the basis of the camera data acquired in step S101 and the auxiliary data acquired in step S106 (S108). Next, the information display control unit 360 displays information indicating the imaging range of the imaging device 10 calculated in step S108 (S109).

Next, in a case where information indicating positions, orientations, and imaging ranges of all the imaging devices 10 has not been displayed as imaging device position information (S110: NO), the process returns to step S106. On the other hand, in a case where the information indicating the positions, the orientations, and the imaging ranges of all the imaging devices 10 has been displayed as the imaging device position information (S110: YES), the information processing device 30 ends the operation.

### [2.4.2. Example 2 of Operation]

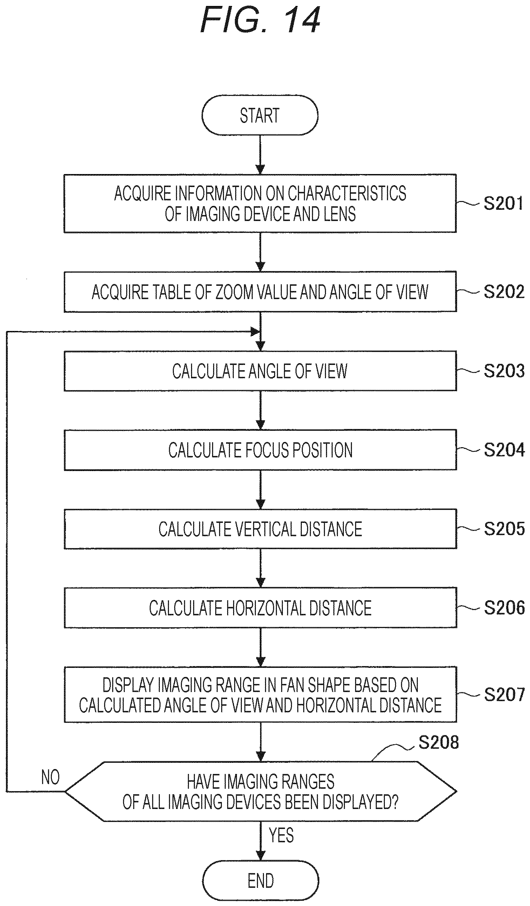

Next, an example of an operation flow related to processing by the imaging position information calculation unit 340 for calculating imaging ranges of imaging devices 10 and processing by the information display control unit 360 for displaying the imaging ranges according to the present embodiment will be described with reference to Fig. 14. First, the imaging position information calculation unit 340 acquires information indicating characteristics of an imaging device 10 and a lens mounted on the imaging device 10 from the video camera data acquisition unit 320 (S201). Next, the imaging position information calculation unit 340 acquires a table of a zoom value and an angle of view for the imaging device 10 from the video camera data acquisition unit 320 (S202).

Next, the imaging position information calculation unit 340 calculates the angle of view corresponding to the zoom value, using the zoom value of the imaging device 10 included in the camera data acquired in step S101 of Fig. 13 and the table acquired in step S202 (S203). Next, the imaging position information calculation unit 340 calculates a focus position on the basis of the zoom value or a focus distance included in the camera data acquired in step S101 of Fig. 13 (S204). Next, the imaging position information calculation unit 340 calculates a vertical distance between the imaging device 10 and an object on the basis of the camera data acquired in step S101 of Fig. 13 (S205).

Next, the imaging position information calculation unit 340 calculates a horizontal distance between the imaging device 10 and the object from the focus position calculated in step S204 and the vertical distance calculated in step S205 (S206). Next, an imaging range of the imaging device 10 is displayed in a fan shape on the basis of the angle of view calculated in step S203 and the horizontal distance calculated in step S206 (S207). Next, in a case where imaging ranges of all the imaging devices 10 have not been displayed (S208: NO), the process returns to step S203. On the other hand, in a case where the imaging ranges of all the imaging devices 10 have been displayed (S208: YES), the information processing device 30 ends the operation.

### [2.4.3. Example 3 of Operation]

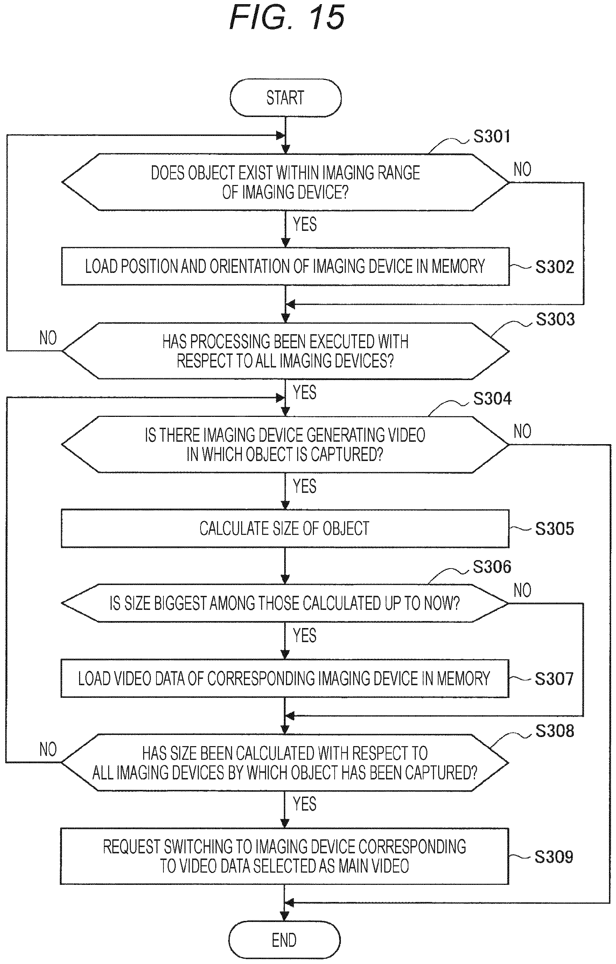

Next, an example of an operation flow related to processing by the information processing device 30 for selecting which imaging device 10 generates video data to be used as a main video from among the plurality of imaging devices 10 according to the present embodiment will be described with reference to Fig. 15. First, in a case where an object exists within an imaging range of any of the imaging devices 10 (S301: YES), the production data analysis unit 350 loads information indicating a position and an orientation of the imaging device 10 in the memory as imaging device position information (S302), and then the process proceeds to step S303. On the other hand, in a case where no object exists within an imaging range of any of the imaging devices 10 (S301: NO), the process proceeds to step S303.

In a case where the processing of step S301 has not been executed with respect to all the imaging devices 10 (S303: NO), the process returns to step S301. On one hand, in a case where the processing of step S301 has been executed with respect to all the imaging devices 10 (S303: YES) and there is no imaging device 10 having generated video data in which the object is captured (S304: NO), the information processing device 30 ends the operation.

On one hand, in a case where the processing of step S301 has been executed with respect to all the imaging devices 10 (S303: YES) and there is no imaging device 10 having generated video data in which the object is captured (S304: NO), the information processing device 30 ends the operation. On the other hand, in a case where the processing of step S301 has been executed with respect to all the imaging devices 10 (S303: YES) and there is an imaging device 10 having generated video data in which the object is captured (S304: YES), the imaging position information calculation unit 340 calculates a size of the captured object (S305).

Next, in a case where a size of the object calculated in step S305 at the latest time is biggest among those calculated in step S305 up to now (S306: YES), the imaging position information calculation unit 340 loads an imaging device 10 corresponding to the size of the object calculated in step S305 at the latest time as a selection candidate in the memory (S307). On the other hand, in a case where the size of the object calculated in step S305 at the latest time is not biggest among those calculated in step S305 up to now (S306: NO), the process proceeds to step S308.

Next, in a case where the size of the object has not been calculated with respect to all the imaging devices 10 by which the object has been captured (S308: NO), the process returns to step S304. On the other hand, in a case where the size of the object has not been calculated with respect to all the imaging devices 10 by which the object has been captured (S308: YES), the post-stage processing request unit 380 requests the post-stage processing device 50 to switch to the video data of the imaging device 10 loaded in the memory in step S307 as the main video (S309), and the information processing device 30 ends the operation.

### <3. Example of Hardware Configuration>

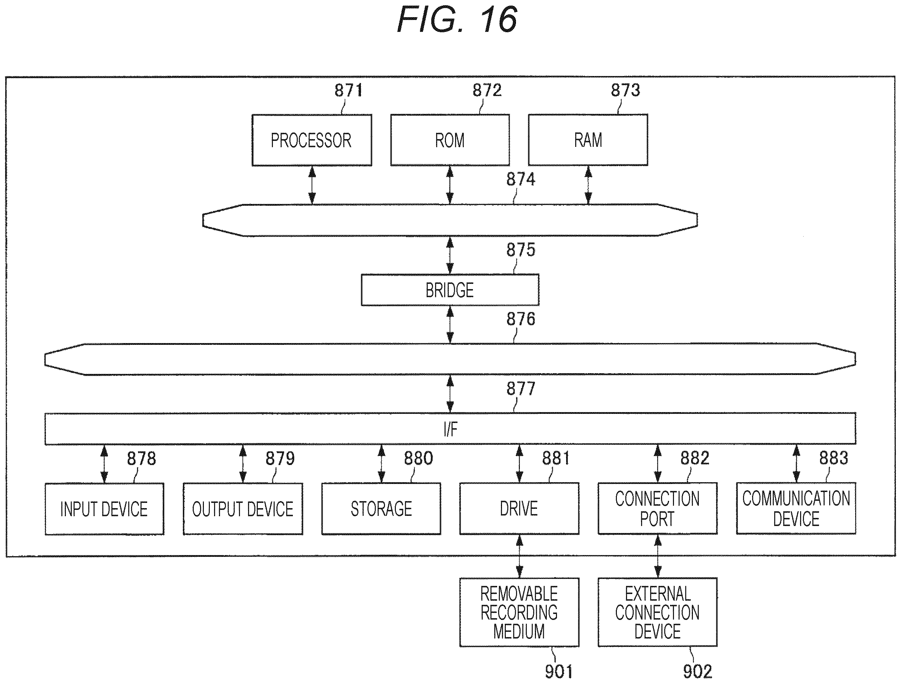

Next, an example of a hardware configuration of the information processing device 30 according to an embodiment of the present disclosure will be described. Fig. 16 is a block diagram showing an example of a hardware configuration of the information processing device 30 according to an embodiment of the present disclosure. Referring to Fig. 16, the information processing device 30 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration shown here is an example, and some of the components may be omitted. Furthermore, components other than the components shown here may be further included.

### (Processor 871)

The processor 871 functions as, for example, an arithmetic processing device or a control device, and controls all or some of operations of the respective components on the basis of various programs recorded in the ROM 872, the RAM 873, the storage 880, or a removable recording medium 901.

### (ROM 872 and RAM 873)

The ROM 872 is a means for loading programs to be read into the processor 871, data to be used for calculation, and the like. The RAM 873 temporarily or permanently loads, for example, programs to be read into the processor 871, various parameters appropriately changed at the time of executing the programs, and the like.

### (Host Bus 874, Bridge 875, External Bus 876, and Interface 877)

The processor 871, the ROM 872, and the RAM 873 are connected to each other, for example, via the host bus 874 capable of high-speed data transmission. Meanwhile, the host bus 874 is connected to the external bus 876, which has a relatively low data transmission speed, for example, via the bridge 875. Furthermore, the external bus 876 is connected to various components via the interface 877.

### (Input Device 878)

For the input device 878, for example, a mouse, a keyboard, a touch panel, a button, a switch, a lever, or the like is used. Moreover, as the input device 878, a remote controller (hereinafter referred to as a remote control) capable of transmitting a control signal using infrared rays or other radio waves may be used. Furthermore, the input device 878 includes a voice input device such as a microphone.

### (Output Device 879)

The output device 879 is a device capable of visually or auditorily notifying a user of acquired information, for example, a display device such as a cathode ray tube (CRT), an LCD, or an organic EL, an audio output device such as a speaker or headphones, a printer, a mobile phone, a facsimile, or the like. Furthermore, the output device 879 according to the present disclosure includes any type of vibration device capable of outputting a tactile stimulus.

### (Storage 880)

The storage 880 is a device for loading various types of data therein. As the storage 880, for example, a magnetic storage device such as a hard disk drive (HDD), a semiconductor storage device, an optical storage device, a magneto-optical storage device, or the like is used.

### (Drive 881)

The drive 881 is a device reading out information recorded on the removable recording medium 901 or writing information into the removable recording medium 901, for example, such as a magnetic disk, an optical disk, a magneto-optical disk, a semiconductor memory, or the like.

### (Removable Recording Medium 901)

The removable recording medium 901 is, for example, a DVD medium, a Blu-ray (registered trademark) medium, an HD DVD medium, any type of semiconductor storage medium, or the like. Of course, the removable recording medium 901 may be, for example, an IC card equipped with a noncontact type IC chip, an electronic device, or the like.

### (Connection Port 882)

The connection port 882 is a port for connecting an external connection device 902, for example, a universal serial bus (USB) port, an IEEE1394 port, a small computer system interface (SCSI), an RS-232C port, an optical audio terminal, or the like.

### (External Connection Device 902)

The external connection device 902 is, for example, a printer, a portable music player, a digital camera, a digital video camera, an IC recorder, or the like.

### (Communication Device 883)

The communication device 883 is a communication device for connection to a network, for example, a communication card for wired or wireless LAN, Bluetooth (a registered trademark), or wireless USB (WUSB), an optical communication router, an asymmetric digital subscriber line (ADSL) router, any type of communication modem, or the like.

### <4. Conclusion>

As described above, the information processing device 30 of the present disclosure enables a user to visually grasp positions, orientations, and imaging ranges of imaging devices in real time, and intuitively determine which imaging device has generated better video data to be selected.

Note that, although the specific example concerning the camera, which is an imaging device 10 in the sports field, has been mainly described above, applicable examples according to the present disclosure are not limited to such an example. For example, the imaging device 10 in the system 1 may be a wearable camera or a drone instead. The information display control unit 360 displays to the user imaging device position information of the wearable camera worn by an operator or the drone moving automatically. Thus, the present disclosure is applicable for various scenes, for example, news reports and the like, rather than being limited to the sports field.

Although the preferred embodiments of the present disclosure have been described in detail above with reference to the accompanying drawings, the technical scope of the present disclosure is not limited to such examples. It is clear that various modifications or alterations may be made by any person having ordinary knowledge in the technical field of the present disclosure within the scope of the technical idea set forth in the claims. It is of course to be understood that the modifications or alterations fall within the technical scope of the present disclosure.

Furthermore, the effects described in the present specification are merely explanatory or exemplary and are not limited thereto. That is, the technology according to the present disclosure may accomplish other effects apparent to those skilled in the art from the description of the present specification, in addition to or in place of the above-described effects.

Note that the following configurations also fall within the technical scope of the present disclosure.
(1) An information processing device including:
   an imaging position information calculation unit that calculates a position and an orientation of an imaging device as imaging device position information on the basis of camera data received from the imaging device in association with video data; and
   an information display control unit that controls a display of the imaging device position information.
(2) The information processing device according to (1), in which
   the camera data includes information indicating an angle of view and a focus distance of the imaging device,
   the imaging position information calculation unit further calculates an imaging range of the imaging device as the imaging device position information on the basis of the information indicating the angle of view and the focus distance of the imaging device, and
   the information display control unit controls the display of the imaging device position information including the imaging range.
(3) The information processing device according to (2), in which
   the camera data further includes characteristics of a lens mounted on the imaging device, and
   the imaging position information calculation unit calculates the imaging range on the basis of the characteristics of the lens.
(4) The information processing device according to (2) or (3), in which
   the imaging position information calculation unit calculates the imaging range further on the basis of a vertical position of the imaging device.
(5) The information processing device according to any one of (1) to (4), in which
   the imaging position information calculation unit associates object position information indicating a position of an object to be imaged with the imaging device position information, and
   the information display control unit controls a display of the object position information with respect to the imaging device position information.
(6) The information processing device according to (5), in which
   the imaging position information calculation unit calculates the object position information on the basis of the video data.
(7) The information processing device according to (5), in which
   the imaging position information calculation unit calculates the object position information on the basis of auxiliary data including data related to the object.
(8) The information processing device according to any one of (5) to (7), in which
   the imaging position information calculation unit calculates the imaging device position information corresponding to a plurality of the imaging devices on the basis of the camera data received from the plurality of imaging devices, and
   the information display control unit controls a display of the imaging device position information corresponding to the plurality of imaging devices.
(9) The information processing device according to (8), in which
   the information display control unit controls the imaging device position information of an imaging device generating the video data selected as a main video, among the plurality of imaging devices, to be displayed in a different mode from those of the other imaging devices.
(10) The information processing device according to (9), in which
   the imaging position information calculation unit specifies an imaging device generating the video data that is a next main video candidate, among the plurality of imaging devices, and
   the information display control unit controls the imaging device position information of the imaging device that is the next main video candidate as specified by the imaging position information calculation unit to be displayed in a different mode from those of the other imaging devices.
(11) The information processing device according to (10), in which
   the imaging position information calculation unit specifies the imaging device that is the next main video candidate on the basis of the imaging device position information and the object position information.
(12) The information processing device according to (8), in which
   the information display control unit controls the imaging device position information of which at least one of a position or an orientation does not change for a predetermined time or is longer, on the basis of the camera data, to be displayed in a different mode from those of the other imaging devices.
(13) The information processing device according to any one of (8) to (12), further including
   a loading unit that loads history information indicating a change history of the imaging device position information,
   in which the information display control unit controls the imaging device position information of an imaging device of which at least one of a position or an orientation based on the camera data does not satisfy the history information, among the imaging devices, to be displayed in a different mode from those of the other imaging devices.
(14) The information processing device according to any one of (9) to (13), further including
   a post-stage processing request unit that requests a post-stage processing device to perform processing for switching from the imaging device selected as the main video to another imaging device generating the video data selected as a next main video among the plurality of imaging devices.
(15) The information processing device according to (14), further including
   an information input unit that receives an input operation for the imaging device position information,
   in which the post-stage processing request unit requests the post-stage processing device to perform the switching processing on the basis of an input received by the information input unit from a user in relation to the switching processing.
(16) The information processing device according to (15), in which
   the information input unit further receives an input for requesting creation of a highlight video, and
   the post-stage processing request unit requests the post-stage processing device to create the highlight video based on the video data of the plurality of imaging devices.
(17) The information processing device according to (16), in which
   the highlight video is configured using the video data of the imaging device by which a predetermined object is captured, and
   the post-stage processing request unit requests the post-stage processing device to create the highlight video including an image of the predetermined object.
(18) The information processing device according to (16) or (17), further including
   a video creation control unit that causes the post-stage processing request unit to request the post-stage processing device to create the highlight video on the basis of the camera data and the auxiliary data including the data related to the object.
(19) An information processing method performed by a processor, the method including:
   calculating a position and an orientation of an imaging device as imaging device position information on the basis of camera data received from the imaging device in association with video data; and
   controlling a display of the imaging device position information.
(20) A program for causing a computer to function as an information processing device including:
   an imaging position information calculation unit that calculates a position and an orientation of an imaging device as imaging device position information on the basis of camera data received from the imaging device in association with video data; and
   an information display control unit that controls a display of the imaging device position information.

### REFERENCE SIGNS LIST

- 1: System
- 10: Imaging device
- 20: CCU
- 30: Information processing device
- 310: Data communication unit
- 320: Video camera data acquisition unit
- 330: Auxiliary data acquisition unit
- 340: Imaging position information calculation unit
- 350: Production data analysis unit
- 360: Information display control unit
- 370: Information input unit
- 380: Post-stage processing request unit
- 391: Loading unit
- 392: Storage unit
- 40: Network
- 50: Post-stage processing device

## Claims

1. An information processing device comprising:
an imaging position information calculation unit that calculates a position and an orientation of an imaging device as imaging device position information on a basis of camera data received from the imaging device in association with video data; and
an information display control unit that controls a display of the imaging device position information.

2. The information processing device according to claim 1, wherein
the camera data includes information indicating an angle of view and a focus distance of the imaging device,
the imaging position information calculation unit further calculates an imaging range of the imaging device as the imaging device position information on a basis of the information indicating the angle of view and the focus distance of the imaging device, and
the information display control unit controls the display of the imaging device position information including the imaging range.

3. The information processing device according to claim 2, wherein
the camera data further includes characteristics of a lens mounted on the imaging device, and
the imaging position information calculation unit calculates the imaging range on a basis of the characteristics of the lens.

4. The information processing device according to claim 2, wherein
the imaging position information calculation unit calculates the imaging range further on a basis of a vertical position of the imaging device.

5. The information processing device according to claim 1, wherein
the imaging position information calculation unit associates object position information indicating a position of an object to be imaged with the imaging device position information, and
the information display control unit controls a display of the object position information with respect to the imaging device position information.

6. The information processing device according to claim 5, wherein
the imaging position information calculation unit calculates the object position information on a basis of the video data.

7. The information processing device according to claim 5, wherein
the imaging position information calculation unit calculates the object position information on a basis of auxiliary data including data related to the object.

8. The information processing device according to claim 5, wherein
the imaging position information calculation unit calculates the imaging device position information corresponding to a plurality of the imaging devices on a basis of the camera data received from the plurality of imaging devices, and
the information display control unit controls a display of the imaging device position information corresponding to the plurality of imaging devices.

9. The information processing device according to claim 8, wherein
the information display control unit controls the imaging device position information of an imaging device generating the video data selected as a main video, among the plurality of imaging devices, to be displayed in a different mode from those of the other imaging devices.

10. The information processing device according to claim 9, wherein
the imaging position information calculation unit specifies an imaging device generating the video data that is a next main video candidate, among the plurality of imaging devices, and
the information display control unit controls the imaging device position information of the imaging device that is the next main video candidate as specified by the imaging position information calculation unit to be displayed in a different mode from those of the other imaging devices.

11. The information processing device according to claim 10, wherein
the imaging position information calculation unit specifies the imaging device that is the next main video candidate on a basis of the imaging device position information and the object position information.

12. The information processing device according to claim 8, wherein
the information display control unit controls the imaging device position information of which at least one of a position or an orientation does not change for a predetermined time or longer, on a basis of the camera data, to be displayed in a different mode from those of the other imaging devices.

13. The information processing device according to claim 8, further comprising
a loading unit that loads history information indicating a change history of the imaging device position information,
wherein the information display control unit controls the imaging device position information of an imaging device of which at least one of a position or an orientation based on the camera data does not satisfy the history information, among the imaging devices, to be displayed in a different mode from those of the other imaging devices.

14. The information processing device according to claim 9, further comprising
a post-stage processing request unit that requests a post-stage processing device to perform processing for switching from the imaging device selected as the main video to another imaging device generating the video data selected as a next main video among the plurality of imaging devices.

15. The information processing device according to claim 14, further comprising
an information input unit that receives an input operation for the imaging device position information,
wherein the post-stage processing request unit requests the post-stage processing device to perform the switching processing on a basis of an input received by the information input unit from a user in relation to the switching processing.

16. The information processing device according to claim 15, wherein
the information input unit further receives an input for requesting creation of a highlight video, and
the post-stage processing request unit requests the post-stage processing device to create the highlight video based on the video data of the plurality of imaging devices.

17. The information processing device according to claim 16, wherein
the highlight video is configured using the video data of the imaging device by which a predetermined object is captured, and
the post-stage processing request unit requests the post-stage processing device to create the highlight video including an image of the predetermined object.

18. The information processing device according to claim 16, further comprising
a video creation control unit that causes the post-stage processing request unit to request the post-stage processing device to create the highlight video on a basis of the camera data and the auxiliary data including the data related to the object.

19. An information processing method performed by a processor, the method comprising:
calculating a position and an orientation of an imaging device as imaging device position information on a basis of camera data received from the imaging device in association with video data; and
controlling a display of the imaging device position information.

20. A program for causing a computer to function as an information processing device including:
an imaging position information calculation unit that calculates a position and an orientation of an imaging device as imaging device position information on a basis of camera data received from the imaging device in association with video data; and
an information display control unit that controls a display of the imaging device position information.
